Europäisches Patentamt

European Patent Office

Office européen des brevets

(11) Numéro de publication: **0 373 042 B1**

# FASCICULE DE BREVET EUROPEEN

(45) Date de publication de fascicule du brevet: **27.04.94** (51) Int. Cl.5: **G10L 5/06**

(21) Numéro de dépôt: **89403317.4**

(22) Date de dépôt: **29.11.89**

(54) **Circuit intégré de programmation dynamique.**

(30) Priorité: **30.11.88 FR 8815605**

(43) Date de publication de la demande:
**13.06.90 Bulletin 90/24**

(45) Mention de la délivrance du brevet:
**27.04.94 Bulletin 94/17**

(84) Etats contractants désignés:
**AT BE CH DE ES FR GB GR IT LI LU NL SE**

(56) Documents cités:
**GB-A- 2 107 100**

**PROCEEDINGS OF THE IEEE 1988 CUSTOM INTEGRATED CIRCUITS CONFERENCE, Rochester, NY, 16-19 mai 1988, pages 10.5.1-10.5.4, IEEE, New York, US; G. OUENOT et al.: "A dynamic programming processor for speech recognition"**

**IEEE JOURNAL OF SOLID-STATE CIRCUITS, vol. 24, no. 2, avril 1989, pages 349-357, IEEE, New York, US; G.M. OUENOT et al.: "A dynamic programming processor for speech recognition"**

(73) Titulaire: **BULL S.A.**
**Tour BULL,**
**1, place Carpeaux**
**F-92800 Puteaux(FR)**

(72) Inventeur: **Ouenot, Georges**
**67 Rue Pierre Brosolette**
**App B14**
**F-92320 Chatillon(FR)**
Inventeur: **Gangolf, Jean-Jacques**
**118 Rue du Houx Guyon**
**F-78440 Janbville(FR)**
Inventeur: **Mariani, Joseph**
**5 Avenue du Général Leclerc**
**F-75014 Paris(FR)**
Inventeur: **Gauvain, Jean-Luc**
**20 Rue de la Roseraie**
**F-92360 Meudon La Fôret(FR)**

(74) Mandataire: **Debay, Yves et al**
**BULL S.A.**
**Tour BULL Cédex 74**
**PC/TB2803**
**F-92039 Paris La Défense (FR)**

SIGNAL PROCESSING IV: THEORIES AND AP-
PLICATIONS - PROCEEDINGS OF EUSIPCO-
88, FOURTH EUROPEAN SIGNAL PROCES-
SING CONFERENCE, Grenoble, 5-8 septembre 1988, vol. III, pages 1553-1556, North Holland Publishing Co., Amsterdam, NL; S. GRO-
CHOLEWSKI: "Dynamic programming processor architecture for real time speech recognition"

ICASSP'85 - INTERNATIONAL CONFERENCE
ON ACOUSTICS, SPEECH AND SIGNAL PRO-
CESSING, Tampa, FL, 26-29 mars 1985, vol. 4,
pages 1449-1452, IEEE, New York, US; M.A.
YODER et al.: "Simulation of a highly parallel
system for word recognition"

## Description

La présente invention concerne un circuit intégré de programmation dynamique et son application à la reconnaissance vocale.

Il est connu des circuits intégrés de programmation dynamique à processeurs séquentiels pour permettre la reconnaissance vocale. Ces processeurs traitent, point par point, le volume tridimentionnel constitué par une table de référence. En associant en parallèle ces processeurs à chacun desquels on attribue une partie du vocabulaire, il est possible d'effectuer la reconnaissance de mots isolés. Ces processeurs comprennent généralement une partie spécialisée pour le calcul des distances avec un opérateur cablé spécifique, une partie dédiée aux calculs de l'équation locale et aux calculs complémentaires, et parfois une partie spécialisée pour la génération d'adresses pour un accès rapide aux données. Toutefois, la plupart de ces processeurs spécialisés ont des équations locales figées pour une application, et les coefficients sur lesquels les calculs de distances locales sont effectués, sont limités en taille et en nombre pour des raisons de capacité, de rapidité de calcul, et de capacité de stockage de ces coefficients. La plupart de ces circuits sont donc limités, d'une part en précision sur les calculs de distances locales, et d'autre part en vitesse d'exécution pour effectuer la reconnaissance des mots enchaînés en temps réel. Enfin, ces processeurs connus sont également dépendants de l'équation locale qui est figée une fois pour toute pour une application bien spécifique.

Un premier but de l'invention est donc de proposer un circuit intégré de programmation dynamique permettant de s'adapter à différentes applications en ayant une équation locale programmable.

Ce premier but est atteint par le fait que le circuit intégré de programmation dynamique, comprenant un circuit d'interface avec le bus de données et d'adresses d'un dispositif maître, ledit circuit d'interface étant relié, d'une part à un bus interne d'accès à une mémoire locale contenant une matrice de référence,

- et d'autre part à un processeur de séquencement ;
- à un circuit décodeur d'instructions et de logique de contrôle et à une mémoire de programme, le bus interne étant également relié en parallèle à une unité comprenant un processeur de calcul des distances ;
- à une unité comprenant un processeur de calcul d'adresse ;
- à une unité comprenant un processeur de calcul général, caractérisé en ce que le processeur de calcul général est associé à un ensemble de registres de travail dont le nombre est programmable par un registre GMOD en fonction des besoins de l'équation locale programmable qui permet la détermination du chemin optimal pour arriver en un point (i,j) et par conséquent, la reconnaissance d'un mot par rapport à une matrice de référence, et en ce que le processeur de calcul d'adresses comporte un circuit spécialisé pour le calcul des adresses physiques du registre sur lequel le processeur de calculs général effectue les calculs correspondant à l'équation locale.

Un deuxième but est d'améliorer les performances du circuit de programmation dynamique de façon à permettre la reconnaissance de mots enchaînés.

Ce but est atteint par le fait que le circuit de programmation dynamique comporte un circuit spécialisé constitué, pour déterminer les deux bits de poids faible de l'adresse physique, d'un additionneur recevant, d'une part les deux bits de poids faible de l'adresse logique d'un des registres sur lequel les calculs sont effectués, et d'autre part deux bits constitués par les deux sorties de deux portes ET recevant chacune un des deux bits de poids faible, et la sortie d'un circuit, déterminant la correction à effectuer, effectue celle-ci lorsque le numéro logique est inférieur à 8.

Selon une autre caractéristique, le circuit déterminant la correction à effectuer comporte un circuit logique (20105) délivrant deux sorties de correction CORRBIT0 et CORRBIT1 respectivement sur le bit de poids le plus faible et l'avant dernier bit de poids le plus faible en fonction des valeurs délivrées par un registre (AMOD, GMOD) et par un circuit comparateur (20100B) avec chacune des valeurs déterminées (2, 4, 6, 8).

Selon une autre caractéristique, le circuit spécialisé comporte pour déterminer le bit de poids le plus faible de l'adresse physique, une porte OU EXCLUSIF associée à un inverseur recevant sur une première entrée le bit de poids le plus faible de l'adresse logique des registres et la sortie d'une porte ET à deux entrées dont l'une des entrées reçoit les bits de poids le plus faible, et l'autre la sortie d'un circuit déterminant à partir des quatre bits d'adresse si l'adresse logique est inférieure à 4 ou non.

Un autre but de l'invention est de permettre d'effectuer la reconnaissance en temps réel en exécutant les calculs pendant la prononciation de l'énoncé.

Ce but est atteint par le fait que les calculs de distance et d'équation locale sont effectués suivant l'axe de la séquence test qui est stockée dans la mémoire de travail externe avec ses résultats intermédiaires.

Un autre but de l'invention est de proposer un système de reconnaissance de la parole utilisant le microprocesseur de comparaison dynamique.

Ce but est atteint par le fait qu'une pluralité de microprocesseurs de comparaison dynamique associés à des mémoires locales sont montés en parallèle sur un bus local sur lequel est branché en parallèle un module d'acquisition et d'analyse et un module de contrôle d'interface. Chaque mémoire locale comportant une partie de la mémoire de référence constituée pour un processus donné de coefficient obtenu par les étapes suivantes :

- préaccentuation par filtre du premier ordre d'équation yn = xn - α• xn-1 ou xn est une suite d'échantillons venant du convertisseur analogique numérique après préamplification et filtrage par un filtre passe-bas, réduction du nombre de coefficient à 128 par transformée de Fourier calculée sur le résultat du produit du signal par la fonction "1 + cosinus" ;
- lissage de la courbe d'énergie par multiplication avec une suite de fonctions triangulaires et calcul de l'intégrale du résultat pour réduire le nombre de coefficients de 128 à 16 ;
- transformation quasi logarithmique pour passer d'une représentation des coefficients sur 16 bits à une représentation sur 8 bits ;
- combinaison linéaire des coefficients par traitement par transformé de Fourier en cosinus sur 16 paramètres ;
- compression temporelle non linéaire par utilisation de la distance de Minkowski entre vecteurs.

D'autres caractéristiques et avantages de la présente invention apparaîtront plus clairement à la lecture de la description ci-après faite en référence aux dessins annexés dans lesquels :

- la figure 1 représente une vue schématique d'un système de reconnaissance de la parole utilisant le circuit intégré de comparaison dynamique ;
- la figure 2A représente l'architecture interne du circuit de comparaison dynamique ;
  la figure 2B représente le schéma fonctionnel du processeur de calcul de distance ;
  la figure 2C représente le schéma fonctionnel du processeur de calcul général ;
  la figure 2D représente le schéma fonctionnel du processeur de calcul d'adresse ;
- la figure 3 représente une première variante d'exécution du circuit de calcul d'adresse des vecteurs nécessaires au calcul de la distance cumulée ;
- la figure 4 représente un deuxième mode de réalisation du circuit de calcul d'adresse dans le cas de quadri vecteurs ;
- la figure 5 représente le mode de réalisation préférentiel du circuit de calcul d'adresse de l'invention ;
- la figure 6 représente la répartition des registres scalaires et vectoriels dans la mémoire constituant les registres de travail.
- la figure 7 représente un tableau de l'évolution du contenu des registres vectoriels ;
- la figure 8 représente le tableau logique des valeurs de sortie du circuit logique utilisé dans le mode de réalisation de la figure 5.
- les figures 9A, 9B et 9C représentent les différentes façons d'effectuer le calcul de distance ;
- la figure 10 représente différents types d'équations locales pour le calcul de distance cumulée.

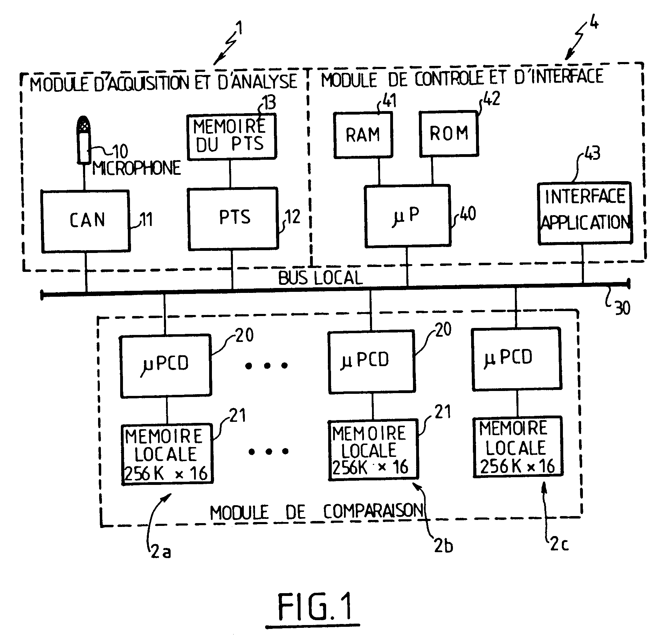

Le système de reconnaissance de la parole représenté à la figure 1 comporte un module d'acquisition et d'analyse (1) constitué d'un microphone (10), d'un circuit convertisseur analogique numérique (11) relié à un bus local (30) et par ce bus local, à un processeur de traitement du signal (12) et une mémoire (13) du processeur de traitement du signal. Cette mémoire (13) contient les instructions de programmation du processeur (12). Le bus local (30) est relié à un ensemble de modules de comparaison (2a, 2b, 2c) dans lequel chaque module comporte un microprocesseur de comparaison dynamique (20) associé à une mémoire locale (21). Chaque module de comparaison (20, 21) est branché en parallèle sur le bus local (30) et relié par ce dernier à un module de contrôle et d'interface (4) constitué d'un processeur général (40) associé à une mémoire vive (41), une mémoire morte (42) et une interface d'application (43). Le processeur général (40), appelé processeur maître, voit son rôle simplifié par cette architecture. Pendant la phase d'apprentissage, il télécharge les formes acoustiques de référence dans les mémoires locales des processeurs de comparaison dynamique (20). Avant la reconnaissance, il télécharge les programmes de reconnaissance dans les mémoires de programme de ces processeurs (20) et effectue leur initialisation. Pendant la reconnaissance, il transmet les évenements de la séquence test venant du module d'analyse (1) vers les processeurs (20), gère le dialogue entre eux et gère le dialogue avec l'application.

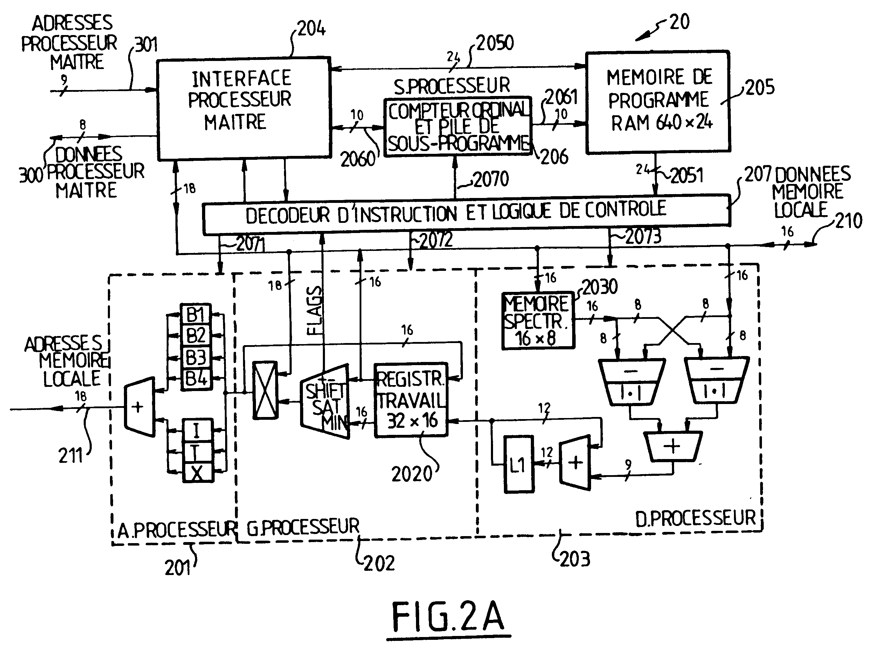

Chaque processeur de comparaison dynamique (fig. 2A) communique par un bus de données de 8 lignes (300) avec le processeur maître (40) et par un bus d'adresses de 9 lignes (301) avec ce même processeur maître (40). Les bus (300 et 301) constituent un sous bus de bus local (30). Le processeur de comparaison dynamique (20) communique également par un bus d'adresses à 18 lignes (211) avec la mémoire locale (21), et par un bus de données à 16 lignes (210) avec les données de la mémoire locale (21). Ce processeur (20) comporte une unité de calcul d'adresse (201) appelée A processeur, une unité de calcul général (202), appelée G processeur, et une unité de calcul de distance (203), appelée D processeur, ces trois unités étant branchées en parallèle sur le bus de données (210) provenant de la mémoire locale (21).

En outre, chaque microprocesseur de comparaison dynamique (20) comprend également un circuit d'interface avec le processeur maître (204) relié au bus (301 et 300) respectivement d'adresses et de données, et au bus de la mémoire locale (210). Cet interface processeur maître (204) est également relié de façon bidirectionnelle avec un circuit décodeur d'instructions et comportant la logique de contrôle (207). Ce circuit décodeur (207) assure la commande de chacun des trois processeurs (201, 202, 203) par une ligne de commande spécifique respectivement (2071, 2072, 2073). De même, ce circuit (207) assure le contrôle par une ligne de commande (2076) d'un circuit (206) constituant un séquenceur appelé S processeur. Ce séquenceur (206) est relié par un bus bidirectionnel à 10 lignes (2060) à l'interface (204) et par un bus de sortie à 10 lignes (2061) à la mémoire de programme (205) constituée par une mémoire vive de 640 mots de 24 bits. Cette mémoire vive (205) est reliée par un bus (2050) à 24 lignes au circuit d'interface (204), et par un deuxième bus (2051) à 24 lignes au circuit décodeur et de contrôle (207). Le circuit G processeur (202) comporte un ensemble (2020) de 32 registres de travail de 16 bits chacun adressés par le circuit décodeur d'instructions (207) par la liaison (2072). Le circuit D processeur (203) comporte une mémoire spectrale de 16 octets (2030).

Le but de ce microprocesseur (20) de comparaison dynamique est de permettre la reconnaissance de mots en évaluant une distance entre images acoustiques. Dans la première phase d'apprentissage, le processeur général (40) télécharge les formes acoustiques de référence dans chacune des mémoires locales (21) associées à chacun des processeurs de comparaison dynamique (20).

Pendant la phase de reconnaissance, le processeur maître (40) transmet les évènements de la séquence test venant du module d'analyse vers la mémoire spectrale (2030) du processeur de calculs de distances (203).

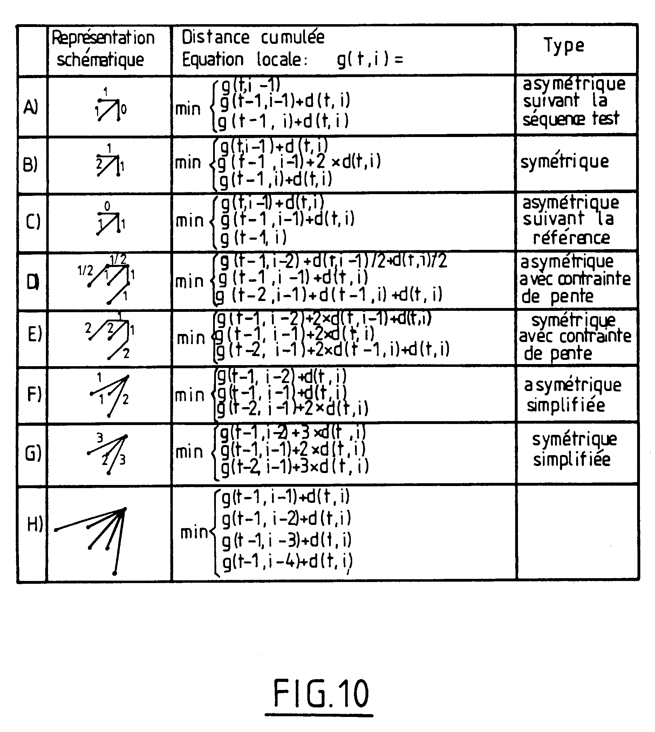

La reconnaissance de mots prononcés ou d'informations stockées dans les matrices de référence par une méthode de compression non linéaire améliore la qualité de la comparaison car elle compense partiellement les variations de rythme. Comme il est difficile de connaître la loi de variation non linéaire, la méthode choisie est de faire calculer la distance entre l'image acoustique de référence et l'image de la séquence test pour toutes les correspondances possibles respectant un certain nombre de contraintes, et de choisir comme correspondance optimale celle qui la minimise. Cette méthode consiste à résoudre le problème d'optimisation global en le transformant en une résolution d'équation de récurrence qui permet à partir des distances locales entre le point "t" et le point "i" et d'une étiquette propagée $b(t,i)$ qui dépend du chemin suivi de déterminer la distance cumulée entre le point "0,0" et le point "t,i". Différents types d'équations locales définies en fonction du chemin suivi sont représentés à la figure 10. La distance cumulée peut ainsi s'exprimer pour un certain type de contrainte sur le chemin suivi par l'ensemble des équations suivantes :

$$g(t,i) = \min \begin{cases} g(t-2,i-1) + d(t-1,i) + d(t,i) & (a) \\ g(t-1,i-1) + d(t,i) & (b) \\ g(t-1,i-2) + 1/2\,d(t,i-1) + 1/2\,d(t,i) & (c) \end{cases}$$

Ces équations correspondent aux équations E de la figure 10 tenant compte d'un chemin arithmétique avec les contraintes de pente indiquées dans la case représentation schématique.

$$b(t,i) = \begin{cases} b(t-2,i-1) & \text{si (a) est minimum} \\ b(t-1,i-1) & \text{si (b) est minimum} \\ b(t-1,i-2) & \text{si (c) est minimum} \end{cases}$$

$d(t,i)$ est une distance calculée localement par le processeur D (203) sans récurrence. La distance locale $d(t,i)$ peut s'exprimer sous la forme d'une des deux équations suivantes :

$$d(t,i) = \Sigma \,|\, a_{tp} - b_{ip} \,| \quad \text{ou} \quad d(t,i) = \left( \Sigma \,|\, a_{tp} - b_{ip} \,|^{2} \right)^{\frac{1}{2}}$$

Dans cette formule, $a_{tp}$ sont les coefficients rangés dans la mémoire spectrale et représentent les évènements de la séquence test, et $b_{ip}$ sont les paramètres de référence rangés dans la mémoire locale (21) (matrice de référence). Les paramètres $a_{tp}$, $b_{ip}$, représentant la séquence d'évènement ou la matrice de référence, sont chacun constitués de 16 coefficients de 8 bits et sont obtenus par le traitement suivant. Les paramètres de référence sont obtenus dans une étape d'acquisition de la matrice de référence par traitement du signal, ce traitement étant constitué :

- d'une étape de préaccentuation par filtre du premier ordre d'équation $yn = xn - \alpha \cdot x_{n-1}$ où $x_n$ est une suite d'échantillons venant d'un convertisseur analogique numérique après préamplification et filtrage par un filtre passe-bas ;
- obtention de 128 coefficients par calcul d'une transformée de Fourier sur le résultat du produit du signal résultant de la préaccentuation par la fonction (1 + cosinus) ;
- lissage de la courbe d'énergie par multiplication avec une suite de fonctions triangulaires et calculs de l'intégrale du résultat pour réduire le nombre de coefficients de 128 à 16 ;
- transformation quasi logarithmique pour passer d'une représentation des coefficients sur 16 bits à une représentation sur 8 bits ;
- compression temporelle non linéaire par utilisation de la distance de Minkowski du premier ordre entre vecteurs pour réduire le nombre de vecteurs dans les parties stables du signal d'entrée.

De même, au cours de la reconnaissance, les évènements de la séquence test subissent le même traitement et permettent d'obtenir un vecteur $a_{tp}$ constitué de 16 coefficients représentés sur 8 bits.

Lorsque l'on veut représenter les évènements de référence et ceux de la séquence test par des vecteurs de 8 coefficients de 8 bits, on ajoutera au processus de traitement avant l'étape de compression temporelle, une étape de combinaison linéaire des coefficients par traitement par une transformée de Fourier en cosinus pour réduire de 16 à 8 le nombre de coefficients.

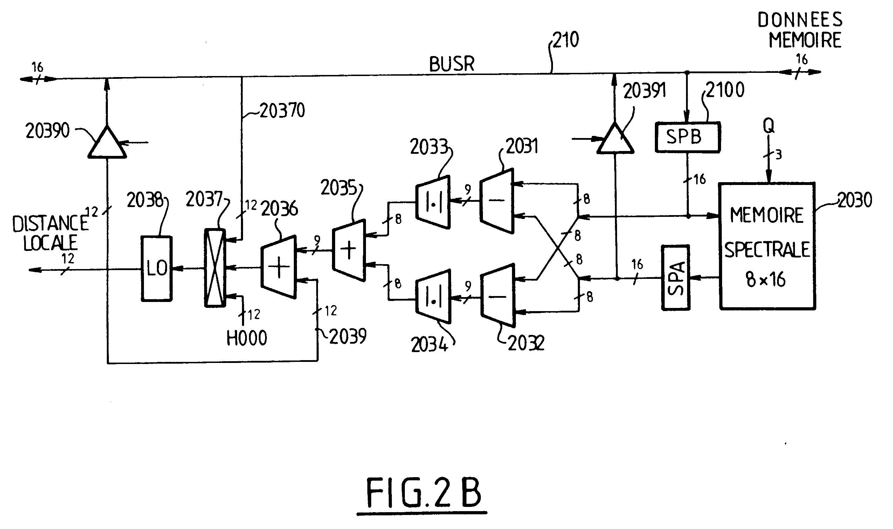

Le calcul de distance de Minkowski du premier ordre est effectué par le processeur D représenté plus en détail à la figure 2B. La mémoire spectrale (2030) capable de contenir 16 octets va contenir un vecteur $a_{tp}$ de l'évènement de la séquence test, tandis que le vecteur $b_{ip}$ de la matrice de référence qui va permettre le calcul de la distance de Minkowski arrive par le bus (210) relié à la mémoire locale (21). Les 16 premiers bits du vecteur $b_{ip}$, stockés temporairement dans un registre tampon (2100) SPB sont envoyés sur deux étages soustracteurs (2031, 2032) fonctionnant sur 8 bits de façon à traiter en parallèle 2 octets, constituant un mot de 16 bits. Les 9 lignes de sortie de chacun des étages soustracteurs (2031, 2032) sont envoyées chacune sur un circuit (respectivement 2033, 2034) calculant la valeur absolue et dont les 8 sorties sont envoyées sur les 16 entrées d'un étage additionneur (2035). Les 16 premiers bits du vecteur $a_{tp}$ de la séquence test sont envoyés à travers le registre tampon SPA sur chacune des 8 entrées des deux circuits soustracteurs (2031, 2032). Ainsi, en sortie de l'étage additionneur (2035), on dispose de la distance de Minkowski calculée sur les 16 premiers bits des vecteurs de référence et de séquence test. Pour continuer à calculer les 14 autres coefficients de 8 bits des vecteurs de référence et de test, il suffit de renvoyer, par une liaison (2039), le résultat obtenu sur l'entrée d'un additionneur (2036) et d'ajouter cela avec le résultat provenant de la sortie (2035) qui, dans l'étape suivante, est constitué par la distance calculée sur les troisième et quatrième octets des vecteurs de séquence test et de référence. Ainsi, le processeur des calculs de distance peut calculer une distance sur 16 coefficients en 9 cycles, à savoir un cycle d'initialisation et 8 cycles d'accumulation. Le résultat de l'additionneur (2036) est envoyé sur un circuit de multiplexage (2037) et la sortie du multiplexeur (2037) est envoyée sur un accumulateur de 12 bits (2038) qui permet de stocker la distance locale en cours de calcul et de renvoyer cette valeur sur les 12 lignes d'entrée de l'additionneur (2036) par la liaison représentée par la référence (2039).

Un amplificateur à trois états (20390) reçoit les 12 sorties de l'accumulateur (2038) et permet d'envoyer celles-ci sur le bus interne du processeur de comparaison dynamique (210). De même, un deuxième amplificateur à trois états (20391) permet d'envoyer le contenu du registre SPA sur le bus (210). Le circuit multiplexeur (2037) permet d'initialiser à zéro le registre (2038) pour le début d'un calcul de distances ou de charger L0 avec une valeur sur 12 bits provenant du bus interne (210) par une liaison (20370).

La distance locale d(t,i) est utilisée par le processeur de calculs général (202) pour calculer la distance cumulée entre le point (0,0) et le point (t,i).

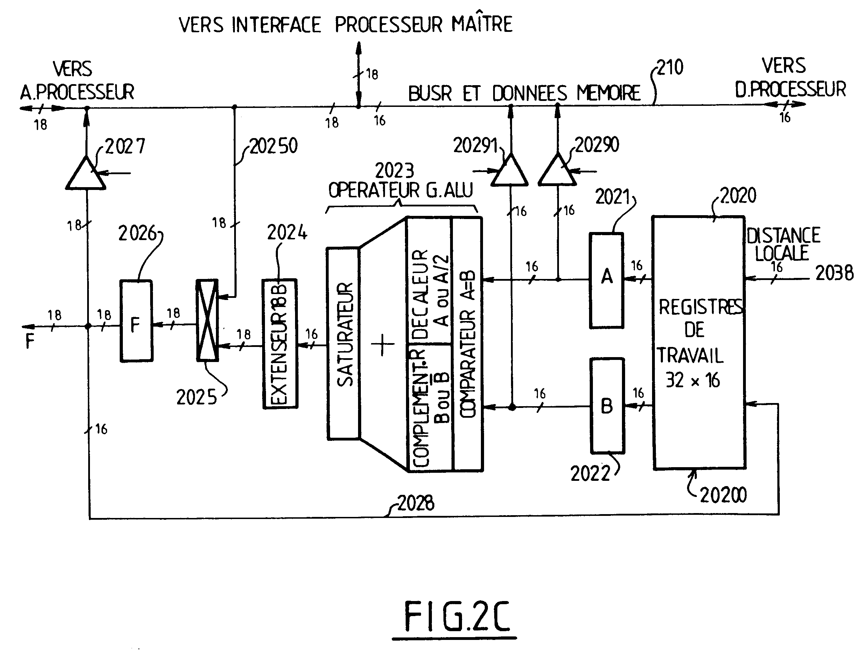

Ce processeur de calcul général (202), représenté en détail à la figure 2C, comprend un banc de registre de travail (2020) constitué de 32 registres de 16 bits chacun, qui reçoit sur ses 16 entrées la sortie du registre tampon (2038) du processeur de distances (203). Les contenus de deux registres de 16 bits sont envoyés l'un sur un registre tampon (2021), l'autre sur un deuxième registre tampon (2022). Le premier registre tampon est relié d'une part à un opérateur (2023), d'autre part par l'intermédiaire d'amplificateurs à trois états (20290) au bus (210). De même, le deuxième registre tampon (2022) est relié d'une part à l'opérateur (2023), et d'autre part par des amplificateurs trois états (20291) au bus (210). L'opérateur (2023) permet selon le contenu des instructions stockées dans la mémoire de programme (205) de réaliser une opération de comparaison, une opération de saturation, une opération d'addition, une opération de complémentation de l'information fournie par le deuxième registre (2022) ou une opération de décalage sur l'information fournie par le premier registre (2021). Cette opération de décalage permet par exemple de faire une division par deux de la valeur contenue dans le registre (2021). Les 16 sorties de l'opérateur (2023) sont envoyées sur un registre extenseur (2024) de 18 bits. Les 18 sorties de ce registre extenseur sont envoyées sur un multiplexeur (2025) qui reçoit sur ses 18 autres entrées (20250) les signaux fournis par les 18 lignes du bus de données (210). Les 18 sorties du multiplexeur (2025) sont envoyées sur un registre tampon (2026) dont les sorties sont rebouclées sur l'ensemble des registres de travail (2020) par les lignes (2028). Les 18 sorties du registre tampon (2026) peuvent également être envoyées à travers des amplificateurs trois états (2027) vers le bus de données (210). Ainsi, si l'on prend l'expression "a" g(t-2,i-1) + d(t-1,i) + d(t,i) qui permet de déterminer la distance cumulée g(t,i), la valeur g(t-2,i-1) sera fournie par un des registres de l'ensemble (2020) au registre tampon (2022), tandis que la valeur d(t,i) sera fournie par le processeur de calcul (2038) et envoyée sur le registre (2021).

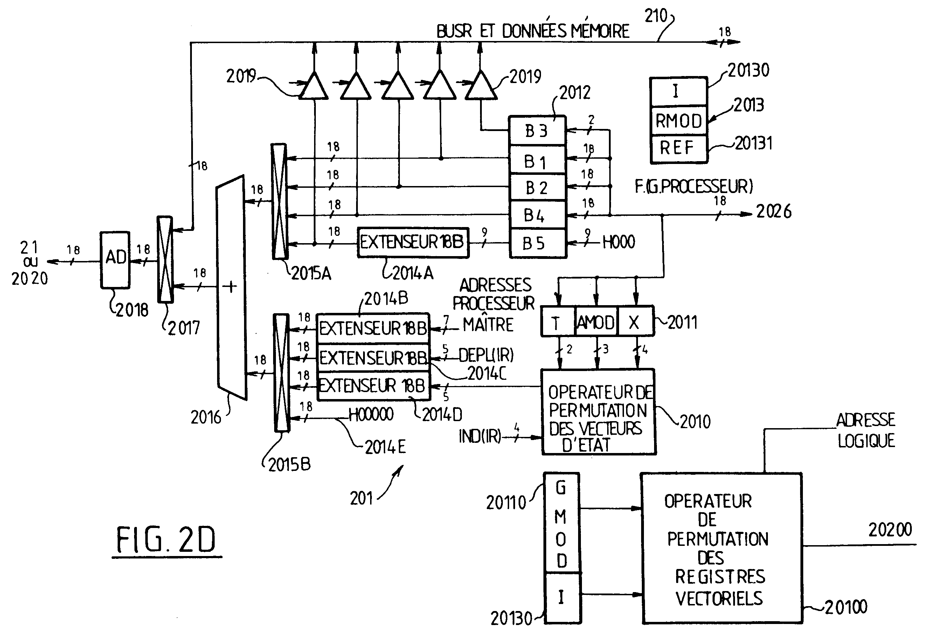

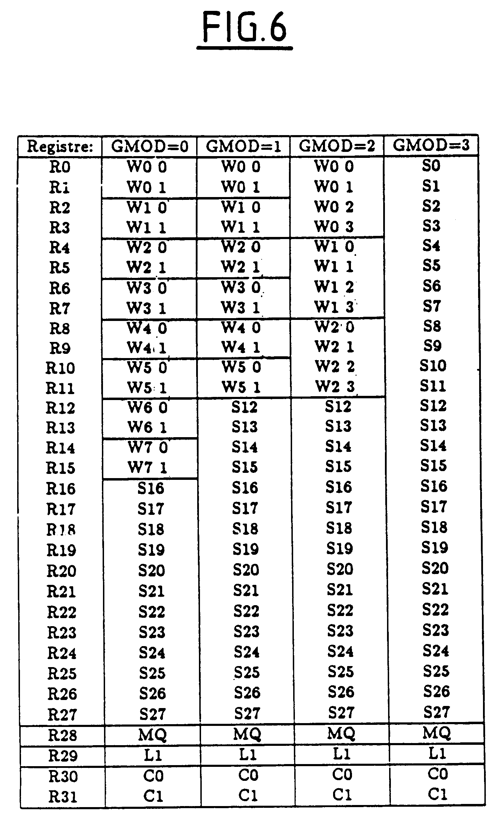

L'opérateur (2023) va, dans un premier temps, effectuer une opération d'addition commandée par l'instruction, et le résultat rebouclé par les lignes (2028) sera envoyé sur le registre (2022), tandis que le registre (2021) par exemple recevra le registre de travail qui contient l'information d(t-1,i). De cette façon, l'expression "a" sera calculée. Après avoir calculé les expressions "a, b, c", l'opérateur (2023) enverra le résultat constitué par l'expression minimum fournie en deux temps (comparaison affectation conditionnelle) par l'opérateur (2023) vers, soit le bus (210), soit le processeur d'adresses (201). L'ensemble des registres de travail (2020) peut être configuré de façon différente suivant les valeurs spécifiées dans un registre GMOD (20110, fig. 2D). Suivant les valeurs contenues dans ce registre de 2 bits GMOD, la configuration de l'ensemble des registres (2020) peut être celle correspondant à l'une des 4 colonnes représentées à la figure 6. La première colonne correspond à une configuration de 8 vecteurs de longueur 2, de 12 scalaires, de 2 constantes, et de scalaires spécialisés. L'avant-dernière configuration correspond à trois vecteurs de longueur 4, 16 scalaires, 2 constantes, 2 scalaires spécialisés. Selon la formule utilisée pour déterminer la distance cumulée, on aura besoin, pour effectuer un calcul, des vecteurs ayant une profondeur allant de 2 à 4. Si l'on a besoin de connaître g(t-2,i), g(t-1,i), b(t-2,i), b(t-1,i) et d(t-1,i) pour calculer g(t,i), on utilisera la configuration correspondant à la valeur GMOD = 0, et on rangera g(t-2,i) dans le W00, g(t-1,i) dans W01, b(t-2,i) dans W10, b(t-1,i) dans W11, et d(t-1,i) dans W21. Dans le cas où l'on a besoin de quadri vecteurs pour le calcul de la distance cumulée, on utilisera la configuration correspondant à la valeur GMOD = 2 avec les vecteurs rangé de la façon suivante :

```
W00 = g(t-4,i)  )
W01 = g(t-3,i)  )  quadri vecteur
W02 = g(t-2,i)  )
W03 = g(t-1,i)  )


W10 = b(t-4,i)  )
W11 = b(t-3,i)  )  quadri vecteur
W12 = b(t-2,i)  )
W13 = b(t-1,i)  )


W20 = d(t-1,i)  )  mono vecteur
```

La gestion des adresses, notamment pour l'ensemble des registres de travail (2020) et des vecteurs d'état en mémoire locale (21), est effectuée par le processeur de calcul d'adresse (201, fig. 2D). Ce processeur de calcul d'adresse comporte un ensemble (2012) de registres (B1, B2, B3, B4, B5) dont les 4 premiers B1, B2, B3, B4 sont reliés à la sortie du registre tampon (2026) du processeur de calcul général. Cette sortie est également reliée à un ensemble de trois registres (2011) constitués par un registre de 2 bits T, par un registre de 3 bits AMOD, par un registre de 4 bits X. Le registre T contient les deux bits de poids faible de l'indice de boucle t (séquence test), le registre X contient le nombre de vecteurs d'état et le registre AMOD spécifie le mode de gestion des vecteurs d'état. Le registre B1 contient les adresses pour les références ou les tables, le registre B2 contient les adresses pour les vecteurs d'état, le registre B3, limité à deux bits, sert de complément d'adresse pour les indirections, le registre B5 sert de compteur spacial pour définir l'adresse à laquelle il faut effectuer un rafraîchissement de la mémoire dynamique. Un registre (2013) RMOD définit la fréquence du rafraîchissement, un premier compteur (20130) I définit d'indice de boucle I pour les vecteurs de référence, et un deuxième compteur (20131) REF définit quand il faut effectuer un rafraîchissement de la mémoire dynamique. Les 9 bits du registre B5 sont envoyés sur un extenseur (2014A) qui étend l'adresse à 18 bits et l'ensemble des registres B1, B2, B4, B5 sont envoyés sur un multiplexeur (2015A) dont les 18 sorties sont envoyées sur un additionneur (2016). Un deuxième multiplexeur (2015B) reçoit les 18 sorties de chacun des extenseurs (2014B, 2014C, 2014D) et une valeur d'initialisation à zéro sur les entrées (2014E). L'extenseur (2014B) reçoit sur 7 lignes l'adresse fournie par le processeur maître. Le deuxième extenseur (2014C) reçoit sur 5 lignes DEPL (ir) et l'extenseur (2014D) reçoit sur 5 lignes la sortie d'un opérateur de permutation des vecteurs d'état (2010) définissant l'adresse des vecteurs d'état en mémoire (21). Les 18 sorties de l'additionneur (2016) sont envoyées sur un multiplexeur (2017) qui reçoit sur ses 18 autres entrées le bus de données (210), et les 18 sorties de ce multiplexeur sont envoyées sur un registre tampon d'adresses (2018).

Le jeu des instructions comporte un champ G.CODE pour commander le processeur de calcul général G et le processeur de contrôle S, et un deuxième champ qui peut éventuellement commander le processeur de calcul d'adresse et le processeur de calcul des distance. Dans le champ G.CODE permettant de commander les opérations du processeur général selon le type de code utilisé, on va pouvoir obtenir de l'opérateur (2023) qu'il exécute une des opérations indiquées dans le tableau ci-après :

|          | G.CODE: | Résultat 16 bits: | Résultat 1 bit: |
|----------|---------|-------------------|-----------------|
|          | 4       | RA + RB           | (RA + RB > FFFF) |
|          | 6       | RA − RB           | (RB $\geq$ RA)  |
| Calculs: | 8       | RA + RB saturé    | (RB = RA)       |
|          | 9       | (RA/2) + RB saturé | (lsb(RA))      |
|          | 0       | RA + RB           | x               |

Pour effectuer le calcul de distance cumulée, on effectue par récurrence des calculs dans une matrice, et on calcule la valeur en un point (t,i) en fonction des valeurs au point (t-1,i-1), (t-2,i-2), etc, suivant le type d'équation utilisée. Les valeurs, permettant ces calculs, sont stockées dans le registre de travail (2020) de la façon explicitée précédemment, et pour favoriser l'aspect temps réel des calculs, on a cherché à minimiser les échanges entre ces registres de travail et la mémoire de données locale (210). Un circuit spécialisé (2010), appelé opérateur de permutation des vecteurs d'état, permet au processeur d'adresse de définir les adresses des vecteurs d'état dans la mémoire (21) et un autre circuit (20100) définit les adresses des vecteurs des registres de travail (2020) qui permettent de fournir par la suite les informations au processeur de calcul général pour effectuer le calcul des distances cumulées. Ainsi, par exemple, si on travaille avec une formule de calcul de distance cumulée nécessitant des bivecteurs g(t-1), g(t-2), b(t-1), b(t-2) et d(t-1), on va stocker ces derniers dans le registre de travail (2020) de la façon ci-après, après avoir sélectionné GMOD à 0 ou à 1. Les bivecteurs sont rangés suivant le tableau ci-après :

```
W00 = g(t-2,i)    )
W01 = g(t-1,i)    ) bivecteur


W10 = b(t-2,i)    )
W11 = b(t-1,i)    ) bivecteur


W20 = d(t-1,i)    ) monovecteur
```

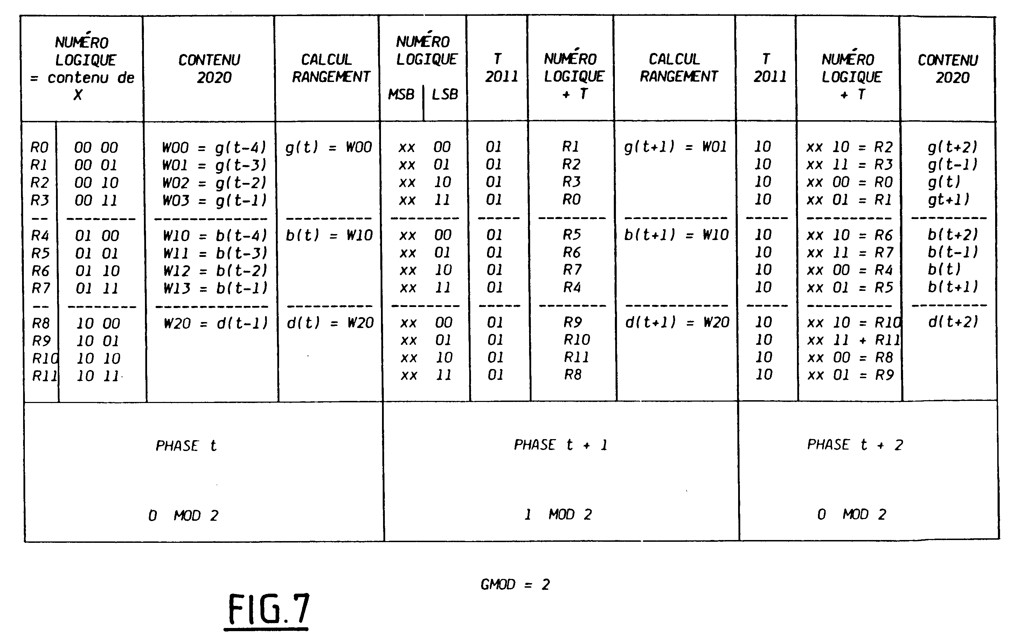

Dans cet exemple, nous stockons deux bivecteurs pour les matrices g et b et un seul vecteur pour la matrice d. L'intérêt de cette manipulation est de ne conserver en mémoire que le strict nombre de vecteurs nécessaires et de ne réécrire que les deux valeurs nouvelles. En fin d'opération de calcul, le processeur inscrit la valeur g(t) à la place de l'ancienne valeur g(t-2), la valeur b(t) à la place de b(t-2), et d(t) à la place de d(t-1). Ceci permet d'économiser deux accès mémoire dans le cas de bivecteurs et dans le cas où l'on a affaire à des quadri vecteurs, on économise six accès mémoire, ce qui sur une boucle de vingt à trente instructions, permet d'avoir un gain de temps de 10 à 20 % pour le traitement. Dans le cas de quadri vecteurs, les vecteurs g(t-4) à g(t-1), nécessaires au calcul de g(t), seront stockés dans les emplacements W00, W01, W10, W11, et après calcul de g(t) sur le dernier, viendra se ranger à l'emplacement W00 de l'ensemble des registres (2020) comme représenté dans la case de la figure 7 correspondant à la phase t. Pour le calcul suivant de g(t + 1), le numéro logique du vecteur sera additionné aux deux derniers bits du registre T, ce qui pour la phase (t + 1) fait correspondre au numéro logique 00 l'adresse physique du registre R1 de la figure 6, au numéro 01 l'adresse physique du registre R2, au numéro 10 l'adresse physique du registre R3, et au numéro 11 l'adresse physique du registre R0. Les contenus de ces registres sont représentés dans la colonne numéro physique de la figure 7, et le résultat g(t + 1) est rentré dans le registre ayant pour numéro physique R1. Pour la phase (t + 2), le registre T contient donc la valeur à "10" et fait correspondre au numéro logique 00 l'adresse physique du registre R2, au numéro logique 01 l'adresse physique du registre R3, au numéro 10 l'adresse physique du registre R0, et au numéro 11 l'adresse physique du registre R1 comme on peut le voir dans la colonne correspondant à la phase (t + 2) sur la figure 7. Le résultat du calcul fournissant g(t + 2) sera rangé à l'adresse physique du registre R2. Les permutations sont ainsi continuées de façon à travailler uniquement sur neuf vecteurs dans le cas où l'on a besoin de quadri vecteurs pour le calcul, et cinq vecteurs dans le cas où l'on a besoin de bivecteurs pour le calcul des distances cumulées. De même, dans le cas de calculs sur des bivecteurs, on utilisera uniquement le dernier bit du registre T qui donne le nombre d'itérations modulo 2, et dans ce cas l'adresse logique sera égale à l'adresse physique lorsque l'on est à un nombre d'itérations égal à zéro modulo 2, et l'adresse logique + 1 sera égale à l'adresse physique lorsque l'on est à un nombre d'itérations égal à 1 modulo 2.

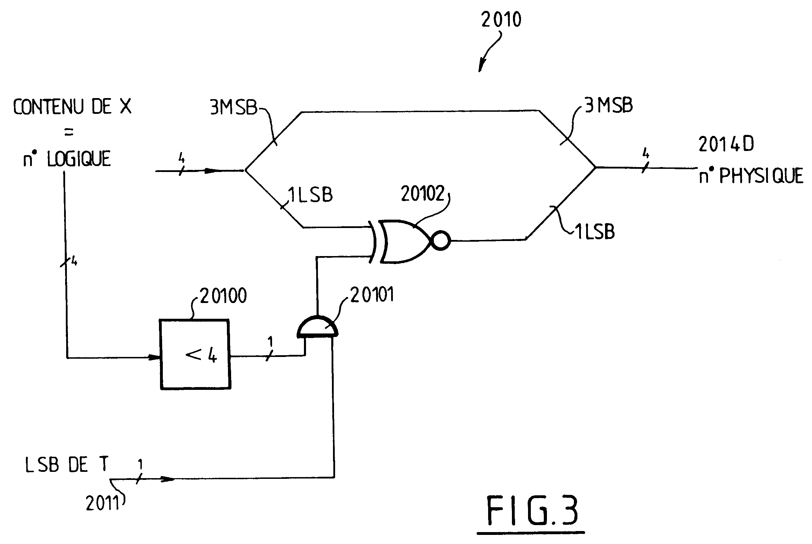

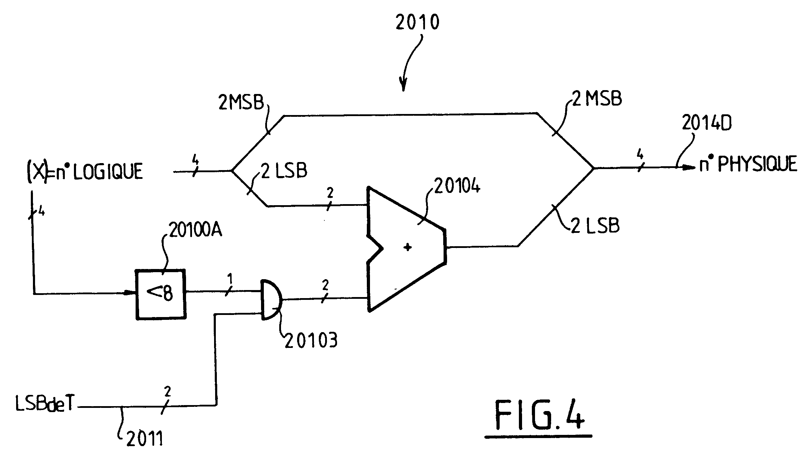

Les figures 3 et 4 représentent respectivement un mode de réalisation de l'opérateur de permutation des vecteurs d'état pour des bivecteurs et respectivement des quadri vecteurs. Le mode de réalisation pour des bivecteurs comporte un comparateur (20100) qui à partir des quatre lignes d'adresses logiques détermine si ces adresses sont inférieures à quatre, et produit sur sa sortie un signal de niveau "1" lorsque celles-ci sont inférieures à quatre. La sortie de ce circuit de comparaison est envoyée sur une porte ET-(20101) dont une autre entrée reçoit le bit de poids le plus faible LSB du registre T (2011). La sortie de cette porte ET(20101) est envoyée sur un circuit comparateur (20102) constitué d'un OU EXCLUSIF suivi d'un inverseur. Ce circuit (20102) reçoit sur sa deuxième entrée le bit de poids le plus faible de l'adresse logique des vecteurs formée sur quatre bits, cette adresse logique étant fournie par le registre X de l'ensemble (2011), puis le bit de poids le plus faible LSB est fourni par la sortie du circuit (20102) et vient se combiner avec les trois autres bits MSB pour fournir l'adresse physique au circuit extenseur (2014D). Le circuit (20102) produit une sortie de niveau "1" lorsque les deux signaux d'entrée sont identiques. Par conséquent, lorsque le numéro logique du vecteur est égal à zéro modulo 2 et lorsque le nombre d'itérations est égal à zéro modulo 2, l'adresse physique est égale au numéro logique additionné de un, tandis que lorsque le numéro logique modulo 2 est égal à 1 et le nombre d'itérations est égal à zéro ou le numéro logique modulo 2 est égal à zéro et le nombre d'itérations égal à 1, l'adresse physique reste égale à l'adresse logique. Dans le cas où le numéro logique est supérieur ou égal à quatre, l'adresse physique reste toujours égale à l'adresse logique.

9

La figure 4 représente le mode de réalisation de l'opérateur de permutation (2010) des vecteurs d'état dans le cas où l'équation de calcul de distance cumulée nécessite deux quadri vecteurs. Dans ce cas, l'adresse logique fournie par le registre X est envoyée sur un comparateur (20101) qui compare cette adresse avec la valeur 8 et délivre sur sa sortie un signal égal à 1 dans le cas où elle est inférieure à la valeur 8. Les deux bits de poids faible provenant du registre T (2011) sont envoyés sur deux portes ET-(20103) dont chacune reçoit sur son autre entrée la sortie du comparateur (20100A). Chacune des sorties des portes ET(20103) est envoyée sur une entrée d'un additionner (20104), lequel reçoit sur ses deux autres entrées, les deux bits de poids faible LSB de l'adresse logique fournie par le registre X (2011). Les deux sorties de cet additionneur (2104) sont recombinées avec les deux bits de poids plus élevé MSB de façon à définir l'adresse physique qui est envoyée sur le registre extenseur (2014D). Le résultat des opérations effectuées sur l'adresse logique selon les phases d'itérations du calcul est représenté à la figure 7. A la phase t, on a calculé g(t), b(t) et ces deux derniers sont rangés aux adresses physiques R0 et R4. A la phase (t + 1), l'adresse logique est additionnée avec les deux bits du registre T "01" et donne l'adresse physique des éléments nécessaires aux calculs. Le calcul effectué sur les éléments R0 à R3 va permettre de déterminer g(t + 1) et le calcul effectué sur les éléments R4 à R7 va permettre de déterminer b(t + 1). Les valeurs g(t + 1) et b(t + 1) sont rangées dans les adresses physiques R1 et R5. A la phase (t + 2), on a représenté directement le résultat du calcul consistant à additionner à l'adresse logique le contenu du registre T qui, en l'occurence, est la valeur "10". Cette manière de gérer les vecteurs d'état permet de minimiser les opérations de permutation et de remplacement à effectuer sur ces derniers à la suite d'un calcul, et par conséquent d'accélérer la vitesse de calcul de l'ensemble.

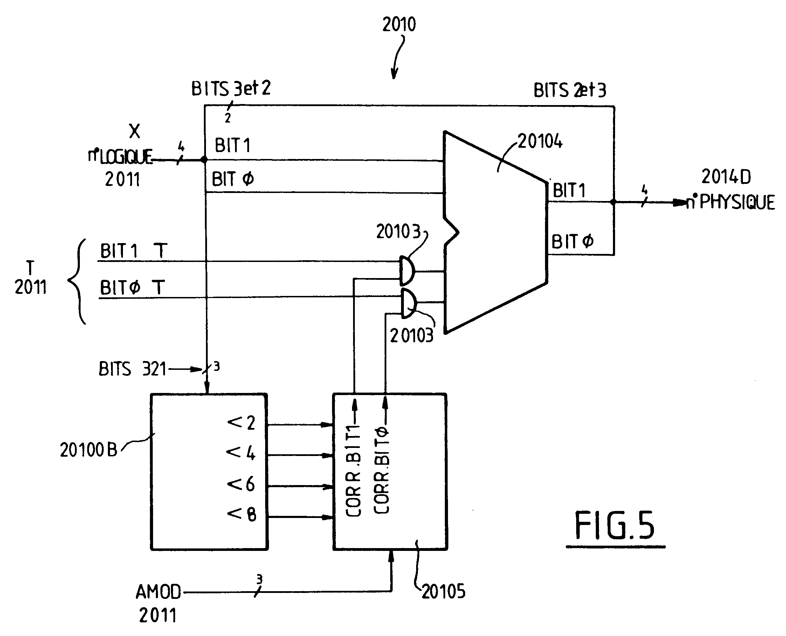

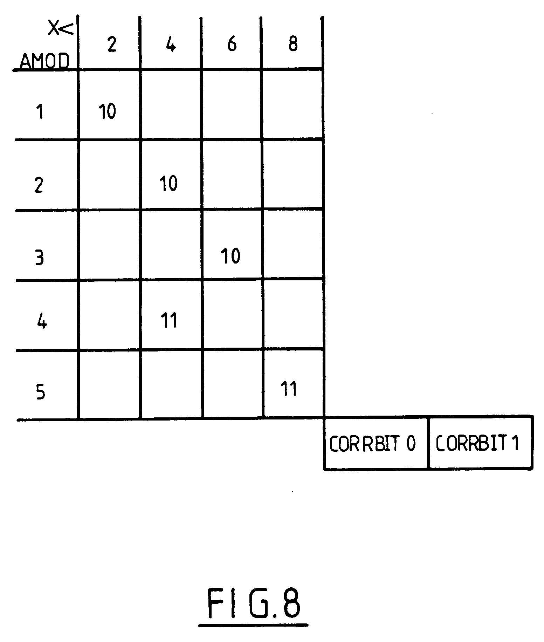

La figure 5 représente un dernier mode de réalisation permettant de gérer, en fonction du registre AMOD et du vecteur d'index X, tous les cas de figure de fonctionnement correspondant soit à un bivecteur, soit à un quadri vecteur pour les vecteurs d'état. Le circuit et le fonctionnement pour les vecteurs des registres de travail (2020) sont identiques, à l'exception que le comparateur (20100B) compare les bits 1, 2, 3 avec les valeurs 12 et 16, au lieu des valeurs 2, 4, 6, 8 ci-dessous, et le fonctionnement du circuit logique (20105) est identique. Dans cette réalisation, les deux bits de poids le plus faible du registre X(2011) sont envoyés sur deux entrées de l'additionneur (20104), lequel reçoit sur ses deux autres entrées respectives, les sorties de deux portes ET(20103). Chaque porte ET(20103) reçoit sur une entrée l'un des deux bits du registre T (2011), et sur l'autre entrée, un signal de correction du bit 1 et/ou du bit 0 selon la porte considérée. Ces signaux CORRBIT1 et CORRBIT0 proviennent d'un circuit logique (20105) qui reçoit en entrée les trois lignes du registre AMOD (2011) et l'une des quatre sorties activées d'un circuit comparateur multiple (20100B). Le circuit comparateur multiple (20100B) compare le registre X contenant l'adresse logique avec successivement les valeurs 2, 4, 6, 8 et positionne la sortie correspondante à la valeur "1" suivant l'adresse logique envoyée. Dans le cas où l'on a affaire à un bivecteur, seule la sortie CORRBIT0 est à "1" et permet d'effectuer la correction sur le bit 0 (bit de poids le plus faible) de l'adresse logique, tandis que dans le cas où l'on a affaire à un quadri vecteur, les deux sorties CORRBIT1 et CORRBIT0 sont toutes les deux à la valeur "1", ce qui permet de corriger les deux bits de poids le plus faible, en l'occurence 0 et 1 de l'adresse logique de la façon déjà vue pour la figure 4. Le circuit logique (20105) délivre, en fonction des valeurs de AMOD comprises entre 1 et 5, et le fait que la valeur du registre X est inférieure à 2, 4, 6 ou 8, un signal CORRBIT0 ou CORRBIT1 ayant les valeurs inscrites dans les cases du tableau matriciel de la figure 8. Ainsi, si AMOD est égal à "1" et X inférieur à "2", CORRBIT0 = "1" et CORRBIT1 = "0". Ceci indique un calcul avec un bivecteur et la correction se fait uniquement sur le bit de poids le plus faible de l'adresse logique. Dans le cas où AMOD égal 4 et X inférieur à 4 ou AMOD égal 5 et X inférieur à 8, CORRBIT0 et CORRBIT1 sont tous les deux à 1 ce qui permet d'effectuer la correction sur les bits 0 et 1 de l'adresse logique.

De même, un opérateur de permutation des registres vectoriels (20100), similaire à quelques modifications près de l'opérateur (2010), fournit sur sa sortie (20200) les adresses physiques des vecteurs des registres de travail (2020). Cet opérateur (20100) reçoit la sortie du registre GMOD (20110) qui, comme on l'a vu précédemment, définit la configuration de l'ensemble des registres de travail (2020). Cet opérateur (20100) reçoit également les 2 bits de poids faibles du compteur I (20130) d'indice de boucle, et les 4 bits d'adresse logique permettant au circuit (20100) de définir les 4 bits bits d'adresse physique (20200) qui permettent l'adressage de l'un des 32 registres de travail (2020).

Tous les calculs de distance cumulée sont effectués en parcourant les matrices selon le processus ci-après, consistant à parcourir pour un évènement test de la séquence test, toutes les références des processus 1 à P, puis à parcourir toutes ces références des processus 1 à P pour l'évènement test suivant, et de permettre le traitement des évènements de la phrase test au fur et à mesure qu'ils arrivent.

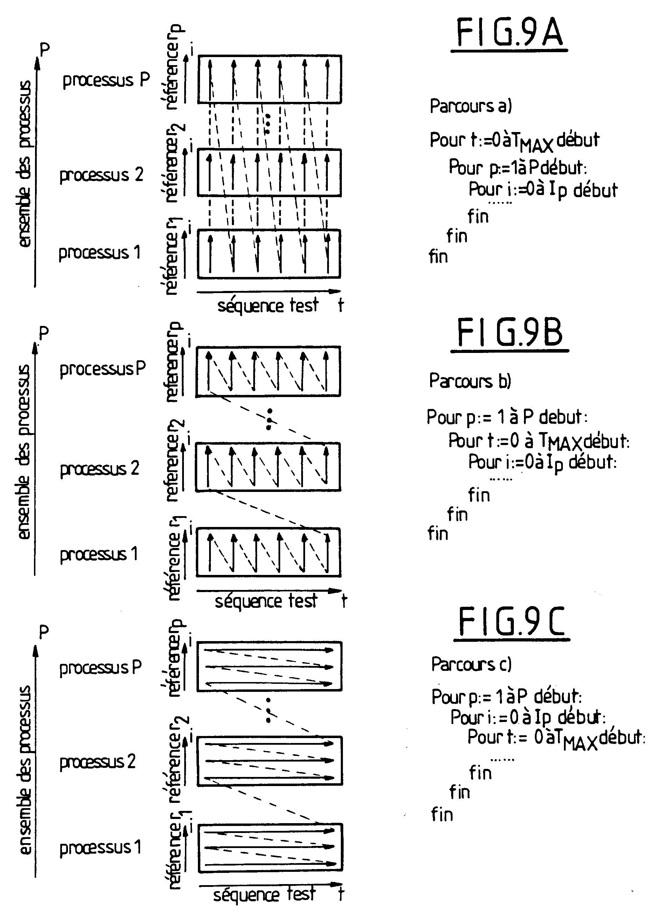

En effet, il existe différentes façons d'aborder les calculs de distance cumulées pour un ensemble de processus P1 à PP stockés dans un ensemble de matrices de référence r1 à rp en fonction du déroulement de la séquence test. Ces différentes façons d'aborder le calcul de distance cumulée sont représentées respectivement aux figures 9a, 9b et 9c. Le processus de la figure 9c consiste à parcourir pour une référence donnée de la matrice de référence r1, l'ensemble de la séquence test qui ensuite va parcourir une deuxième référence de cette même matrice jusqu'à la fin de la matrice pour ensuite passer à la matrice r2 suivante correspondant au processus P2. Ce processus de traitement présente l'avantage de nécessiter peu d'espace mémoire pour les résultats intermédiaires puisque les calculs sont effectués dans une seule matrice à un instant donné. La deuxième solution représentée à la figure 9b consiste à parcourir pour un évènement test de la séquence test l'ensemble des références d'une matrice r1, puis à parcourir pour un deuxième évènement de la séquence test, le même ensemble des références de la matrice r1 jusqu'à avoir parcouru tous les évènements de la séquence test pour ensuite passer au parcours traitant le premier évènement de la séquence test avec l'ensemble des références de la matrice r2 correspondant au processus P2. Et ainsi de suite jusqu'au processus PP. Cette solution intermédiaire ne présente aucun intérêt. En outre, cette solution comme la première présente l'inconvénient d'être obligé d'attendre la fin de l'énoncé correspondant à la fin de la séquence test pour commencer les calculs.

La solution correspondant à la figure 9a est la solution la plus performante choisie pour effectuer le calcul des distances. L'avantage de ce traitement consistant à parcourir pour un évènement test de la séquence test, toutes les références des processus 1 à P, puis à parcourir toutes ces références des processus 1 à P pour l'évènement test suivant, et de permettre le traitement des évènements de la phrase test au fur et à mesure qu'ils arrivent. Cette solution nécessite un besoin d'espace mémoire supplémentaire qui, compte tenu de la taille des mémoires locales (21) n'est pas un point bloquant.

Le circuit de l'invention permet donc d'effectuer de la comparaison dynamique avec des équations locales programmables, tout en ayant des performances élevées permettant la reconnaissance en temps réel. Ce circuit peut être avantageusement utilisé dans les systèmes de reconnaissance de la parole.

## Revendications

1. Circuit intégré de programmation dynamique comprenant un circuit d'interface (204) avec le bus de données et d'adresses (30) d'un dispositif maître (40), ledit circuit d'interface étant relié d'une part à un bus interne (210) d'accès à une mémoire locale (21) contenant une matrice de référence, et d'autre part à un processeur de séquencement (206), à un circuit décodeur d'instructions (207) et de logique de contrôle et à une mémoire de programme (205), le bus interne (210) étant également relié en parallèle à une unité comprenant un processeur de calcul de distance (203), à une unité comprenant un processeur de calcul d'adresse (201), à une unité comprenant un processeur de calcul général (202), caractérisé en ce que le processeur de calcul général (202) est associé à un ensemble de registres de travail (2020) dont le nombre est programmable par un registre GMOD en fonction des besoins de l'équation locale programmable qui permet la détermination du chemin optimal pour arriver en un point (i,j), et par conséquent, la reconnaissance d'un mot par rapport à la matrice de référence, et en ce que le processeur de calcul d'adresse (201) comporte un circuit spécialisé (20100) pour le calcul des adresses physiques du registre (2020) sur lequel le processeur de calculs général (202) effectue les calculs correspondant à l'équation locale.

2. Circuit spécialisé selon la revendication 1, caractérisé en ce qu'il comporte, pour déterminer les 2 bits de poids faible de l'adresse physique, un additionneur (20104) recevant d'une part les 2 bits de poids faible de l'adresse logique d'un des registres (2020) sur lequel les calculs sont effectués, et d'autre part 2 bits constitués par les 2 sorties de 2 portes ET(20103) recevant chacune un des deux bits de poids faible et la sortie d'un circuit (20100A, 20100B, 20105) déterminant la correction à effectuer.

3. Circuit spécialisé selon la revendication 2, caractérisé en ce que le circuit (20100A), déterminant la correction à effectuer, effectue celle-ci lorsque le numéro logique est inférieur à 8.

4. Circuit spécialisé selon la revendication 2, caractérisé en ce que le circuit (20100A, 20105), déterminant la correction a effectuer, comporte un circuit logique (20105) délivrant deux sorties de correction CORRBIT0 et CORRBIT1 respectivement sur le bit de poids le plus faible et l'avant dernier bit de poids le plus faible en fonction des valeurs délivrées par un registre (AMOD) et par un circuit comparateur (20100B) avec chacune des valeurs 2, 4, 6, 8.

5. Circuit spécialisé selon la revendication 1, caractérisé en ce qu'il comporte pour déterminer le bit de poids le plus faible de l'adresse physique, une porte OU EXCLUSIF (20102) associée à un inverseur recevant sur une première entrée le bit de poids le plus faible de l'adresse logique des registres (2020) et la sortie d'une porte ET(20101) à 2 entrées dont l'une des entrées reçoit le bit de poids le plus faible et l'autre la sortie d'un circuit (20100) déterminant, à partir des 4 bits d'adresses, si le numéro logique est inférieur à 4.

6. Circuit spécialisé selon une des revendications précédentes, caractérisé en ce que les calculs de distance et d'équation locale sont effectués suivant l'axe de la séquence test qui est stockée dans la mémoire de travail externe avec ses résultats intermédiaires.

7. Circuit intégré de programmation dynamique selon une des revendications précédentes, caractérisé en ce que les éléments de la matrice de référence ou les évènements d'une séquence test sont obtenus par traitement des signaux acoustiques selon les étapes suivantes :
   - préaccentuation par un filtre du premier ordre d'équation $y_n = x_n - \alpha \cdot x_{n-1}$, ou $x_n$ est une suite d'échantillons venant d'un convertisseur analogique numérique après préamplification et filtrage par filtre passe-bas ;
   - transformée de Fourier calculée sur le résultat du produit du signal par la fonction "1 + cosinus" pour obtenir 128 coefficients ;
   - lissage de la courbe d'énergie par multiplication avec une suite de fonctions triangulaires et calcul de l'intégral du résultat pour réduire le nombre de coefficients de 128 à 16 ;
   - transformation quasi logarithmique pour passer d'une représentation des coefficients sur 16 bits à une représentation sur 8 bits ;
   - compression temporelle non linéaire par utilisation de la distance de Minkowski entre vecteurs.

8. Circuit selon la revendication précédente, caractérisé en ce que la suite d'étapes comprend en outre une étape de combinaison linéaire des coefficients par traitement par transformée de Fourier cosinus sur 16 paramètres pour passer à 8 paramètres de 8 bits avant l'étape de compression temporelle non linéaire.

**Claims**

1. An integrated circuit for dynamic programming comprising an interface circuit (204) with the data and address bus (30) of a master device (40), said interface circuit being connected on the one hand to an internal bus (210) for access to a local memory (21) containing a reference matrix, and on the other hand to a sequencing processor (206), to an instruction decoder (207) and control logic circuit and to a program memory (205), the internal bus (210) also being connected in parallel to a unit comprising a distance calculation processor (203), to a unit comprising an address calculation processor (201), to a unit comprising a general calculation processor (202), characterised in that the general calculation processor (202) is associated with a set of working registers (2020), the number of which is programmable by a register GMOD as a function of the needs of the programmable local equation which makes it possible to determine the optimum path in order to arrive at a point (i, j) and, consequently, to recognise a word relative to the reference matrix, and in that the address calculation processor (201) comprises a specialised circuit (20100) for calculating the physical addresses of the register (2020) on which the general calculation processor (202) carries out the calculations corresponding to the local equation.

2. A specialised circuit according to Claim 1, characterised in that, in order to determine the two least significant bits of the physical address, it comprises an adder (20104) receiving on the one hand the two least significant bits of the logical address of one of the registers (2020) on which the calculations are carried out and, on the other hand, two bits constituted by the two outputs of two AND gates (20103) each receiving one of the two least significant bits and the output of a circuit (20100A, 20100B, 20105) determining the correction to be made.

3. A specialised circuit according to Claim 2, characterised in that the circuit (20100A) determining the correction to be carried out carries this out when the logical number is less than 8.

4. A specialised circuit according to Claim 2, characterised in that the circuit (20100A, 20105) determining the correction to be carried out comprises a logic circuit (20105) delivering two correction outputs CORRBIT0 and CORRBIT1 respectively to the least significant bit and the last but one least significant bit as a function of the values delivered by a register (AMOD) and by a comparator (20100B) with each of the values 2, 4, 6, 8.

5. A specialised circuit according to Claim 1, characterised in that, in order to determine the least significant bit of the physical address, it comprises an EXCLUSIVE OR gate (20102) associated with an inverter receiving at a first input the least significant bit of the logical address of the registers (2020) and the output of an AND gate (20101) with two inputs, one of the inputs of which receives the least significant bit and the other, the output of a circuit (20100) determining, from the four address bits, whether the logical number is less than 4.

6. A specialised circuit according to one of the preceding claims, characterised in that the distance and local equation calculations are carried out along the axis of the test sequence which is stored in the external working memory with its intermediate results.

7. An integrated circuit for dynamic programming according to one of the preceding claims, characterised in that the elements of the reference matrix or the events of a test sequence are obtained by processing acoustic signals according to the following stages:
   - pre-emphasis by a filter of the first order of equation yn = $x_n - \alpha \bullet x_{n-1}$, where $x_n$ is a series of samples coming from an analogue-to-digital converter after preamplification and filtering by a low-pass filter;
   - Fourier transform calculated on the result of the product of the signal and the function "1 + cosine" to obtain 128 coefficients;
   - smoothing of the energy curve by multiplying with a series of triangular functions and calculation of the integral of the result to reduce the number of coefficients from 128 to 16;
   - quasi-logarithmic transformation to change from a representation of the coefficients on 16 bits to a representation on 8 bits;
   - non-linear time compression by using the Minkowski distance between vectors.

8. A circuit according to the preceding claim, characterised in that the series of stages further comprises a stage of linear combination of the coefficients by processing by Fourier cosine transform on 16 parameters to change to eight 8-bit parameters before the stage of non-linear time compression.

**Patentansprüche**

1. Integrierte Schaltung für dynamische Programmierung, mit einer Schnittstellenschaltung (204) zur Verbindung mit dem Daten- und Adressenbus (30) einer Haupteinrichtung (40), wobei die Schnittstellenschaltung einerseits mit einem internen Bus (210) für den Zugriff auf einen lokalen Speicher (21), der eine Referenzmatrix enthält, und andererseits mit einem Ablaufsteuerungsprozessor (206), mit einer Befehlsdecodier-(207) und Steuerlogik-Schaltung sowie mit einem Programmspeicher (205) verbunden ist, wobei der interne Bus (210) außerdem mit einer Einheit, die einen Abstandsberechnungsprozessor (203) enthält, mit einer Einheit, die einen Adressenberechnungsprozessor (201) enthält, sowie mit einer Einheit, die einen allgemeinen Rechenprozessor (202) enthält, parallel verbunden ist, dadurch gekennzeichnet, daß der allgemeine Rechenprozessor (202) mit einer Gruppe von Arbeitsregistern (2020) verbunden ist, deren Anzahl durch ein Register GMOD in Abhängigkeit von den Anforderungen der programmierbaren lokalen Gleichung, welche die Bestimmung des optimalen Weges zum Erreichen eines Punktes (i,j) und folglich die Wiederkennung eines Wortes in bezug auf die Referenzmatrix erlaubt, programmierbar ist, und daß der Adressenberechnungsprozessor (201) eine spezialisierte Schaltung (20100) für die Berechnung der physikalischen Adressen des Registers (2020) enthält, in dem der allgemeine Rechenprozessor (202) die der lokalen Gleichung entsprechenden Rechnungen ausführt.

2. Spezialisierte Schaltung gemäß Anspruch 1, dadurch gekennzeichnet, daß sie für die Bestimmung der 2 Bits mit niedriger Wertigkeit der physikalischen Adresse einen Addierer (20104) enthält, der einerseits die 2 Bits mit niedriger Wertigkeit der logischen Adresse eines Registers (2020), in dem die Rechnungen ausgeführt werden, und andererseits 2 Bits empfängt, die von den 2 Ausgangssignalen von 2 UND-Gattern (20103) gebildet sind, wobei die beiden UND-Gatter jeweils eines der beiden Bits mit niedriger Wertigkeit sowie das Ausgangssignal einer Schaltung (20100A, 20100B, 20105) empfängt, die die auszuführende Korrektur bestimmt.

**3.** Spezialisierte Schaltung gemäß Anspruch 2, dadurch gekennzeichnet, daß die Schaltung (20100A), die die auszuführende Korrektur bestimmt, diese ausführt, wenn die logische Nummer Kleiner als 8 ist.

**4.** Spezialisierte Schaltung gemäß Anspruch 2, dadurch gekennzeichnet, daß die Schaltung (20100A, 20105), die die auszuführende Korrektur bestimmt, eine Logikschaltung (20105) enthält, die in Abhängigkeit von Werten, die von einem Register (AMOD) und von einer einen Vergleich mit jedem der Werte 2, 4, 6, 8 durchführenden Vergleichsschaltung (20100B) ausgegeben werden, zwei Korrekturausgangssignale (CORRBIT0 bzw. CORRBIT1) für das Bit mit niedrigster Wertigkeit bzw. für das dem Bit mit niedrigster Wertigkeit direkt vorhergehende Bit ausgibt.

**5.** Spezialisierte Schaltung gemäß Anspruch 1, dadurch gekennzeichnet, daß sie für die Bestimmung des Bits mit niedrigster Wertigkeit der physikalischen Adresse ein mit einem Inverter verbundenes EXKLUSIV-ODER-Gatter (20102) enthält, das an seinem ersten Eingang das Bit mit niedrigster Wertigkeit der logischen Adresse der Register (2020) und das Ausgangssignal eines UND-Gatters (20101) mit zwei Eingängen empfängt, wovon einer dieser Eingänge das Bit mit niedrigster Wertigkeit und der andere das Ausgangssignal einer Schaltung (20100) empfängt, die anhand von 4 Adressenbits bestimmt, ob die logische Nummer kleiner als 4 ist.

**6.** Spezialisierte Schaltung gemäß einem der vorangehenden Ansprüche, dadurch gekennzeichnet, daß die Abstandsberechnung und die Rechnungen der lokalen Gleichung längs der Achse der Testfolge ausgeführt werden, die in dem externen Arbeitsspeicher zusammen mit den Zwischenergebnissen gepeichert ist.

**7.** Integrierte Schaltung für dynamische Programmierung gemäß den vorangehenden Ansprüchen, dadurch gekennzeichnet, daß die Elemente der Referenzmatrix oder die Ereignisse einer Testfolge durch die Verarbeitung von akustischen Signalen gemäß den folgenden Schritten erhalten werden:
- Vorab-Hervorhebung durch ein Filter erster Ordnung der Gleichung $yn = x_n - \alpha \cdot x_{n-1}$, wobei $x_n$ eine Folge von Abtastwerten ist, die von einem Analog/Digitalumsetzer nach Vorverstärkung und Filterung durch ein Tiefpaßfilter kommen;
- Fourier-Transformation, die für das Ergebnis des Produkts des Signals mit der Funktion "1 + Cosinus" berechnet wird, um 128 Koeffizienten zu erhalten;
- Glätten der Energiekurve durch Multiplikation mit einer Folge von trigonalen Funktionen und Berechnung des Integrals des Ergebnisses, um die Anzahl der Koeffizienten von 128 auf 16 zu reduzieren;
- quasilogarithmische Transformation, um von einer Koeffizientendarstellung mit 16 Bits zu einer Darstellung mit 8 Bits überzugehen;
- nichtlineare zeitliche Komprimierung durch Verwenden des Minkowski-Abstandes zwischen Vektoren.

**8.** Schaltung gemäß dem vorangehenden Anspruch, dadurch gekennzeichnet, daß die Folge von Schritten außerdem einen Schritt der Linearkombination von Koeffizienten durch die Verarbeitung mit Cosinus-Fouriertransformation von 16 Parametern enthält, um vor dem Schritt der nichtlinearen zeitlichen Komprimierung zu 8 Parametern von 8 Bits überzugehen.

FIG.1

FIG.2A

ADRESSES PROCESSEUR MAITRE 301

9

DONNEES 300 PROCESSEUR MAITRE

8

INTERFACE PROCESSEUR MAITRE 204

S.PROCESSEUR 2050

COMPTEUR ORDINAL ET PILE DE SOUS-PROGRAMME 2060 206

2061

MEMOIRE DE PROGRAMME RAM 640×24 205

20

2051

DECODEUR D'INSTRUCTION ET LOGIQUE DE CONTROLE 2070

207 DONNEES MEMOIRE LOCALE 210

2071 2072 2073

ADRESSES MEMOIRE LOCALE

B1 B2 B3 B4 I T X

211

FLAGS

SHIFT SAT MIN

REGISTR. TRAVAIL 32×16 2020

MEMOIRE SPECTR. 16×8 2030

L1

A.PROCESSEUR 201 G.PROCESSEUR 202 D.PROCESSEUR 203

EP 0 373 042 B1

16

## FIG.2 B

EP 0 373 042 B1

FIG.2C

VERS INTERFACE PROCESSEUR MAÎTRE

VERS A.PROCESSEUR

BUSR ET DONNEES MEMOIRE

VERS D.PROCESSEUR

210

2027

20250

2023
OPERATEUR G.ALU

20291

20290

2021

2020

2026

2024

2025

EXTENSEUR 18B

SATURATEUR

DECALEUR A ou A/2

COMPLEMENT.R B ou B̄

COMPARATEUR A=B

A

B

REGISTRES DE TRAVAIL 32 × 16

DISTANCE LOCALE

2038

2022

20200

2028

EP 0 373 042 B1

FIG. 2D

CONTENU DE X
=
n° LOGIQUE

3MSB

3MSB

2014D
n° PHYSIQUE

1LSB

20102

1LSB

20100

20101

< 4

LSB DE T

2011

FIG.3

FIG.4

FIG.5

# FIG.6

| Registre: | GMOD=0 | GMOD=1 | GMOD=2 | GMOD=3 |
|-----------|--------|--------|--------|--------|
| R0 | W0 0 | W0 0 | W0 0 | S0 |
| R1 | W0 1 | W0 1 | W0 1 | S1 |
| R2 | W1 0 | W1 0 | W0 2 | S2 |
| R3 | W1 1 | W1 1 | W0 3 | S3 |
| R4 | W2 0 | W2 0 | W1 0 | S4 |
| R5 | W2 1 | W2 1 | W1 1 | S5 |
| R6 | W3 0 | W3 0 | W1 2 | S6 |
| R7 | W3 1 | W3 1 | W1 3 | S7 |
| R8 | W4 0 | W4 0 | W2 0 | S8 |
| R9 | W4 1 | W4 1 | W2 1 | S9 |
| R10 | W5 0 | W5 0 | W2 2 | S10 |
| R11 | W5 1 | W5 1 | W2 3 | S11 |
| R12 | W6 0 | S12 | S12 | S12 |
| R13 | W6 1 | S13 | S13 | S13 |
| R14 | W7 0 | S14 | S14 | S14 |
| R15 | W7 1 | S15 | S15 | S15 |
| R16 | S16 | S16 | S16 | S16 |
| R17 | S17 | S17 | S17 | S17 |
| R18 | S18 | S18 | S18 | S18 |
| R19 | S19 | S19 | S19 | S19 |
| R20 | S20 | S20 | S20 | S20 |
| R21 | S21 | S21 | S21 | S21 |
| R22 | S22 | S22 | S22 | S22 |
| R23 | S23 | S23 | S23 | S23 |
| R24 | S24 | S24 | S24 | S24 |
| R25 | S25 | S25 | S25 | S25 |
| R26 | S26 | S26 | S26 | S26 |
| R27 | S27 | S27 | S27 | S27 |
| R28 | MQ | MQ | MQ | MQ |
| R29 | L1 | L1 | L1 | L1 |
| R30 | C0 | C0 | C0 | C0 |
| R31 | C1 | C1 | C1 | C1 |

| NUMÉRO LOGIQUE = contenu de X | | CONTENU 2020 | CALCUL RANGEMENT | NUMÉRO LOGIQUE | | T 2011 | NUMÉRO LOGIQUE + T | CALCUL RANGEMENT | T 2011 | NUMÉRO LOGIQUE + T | CONTENU 2020 |
|---|---|---|---|---|---|---|---|---|---|---|---|
| | | | | MSB | LSB | | | | | | |
| R0 | 00 00 | W00 = g(t-4) | g(t) = W00 | xx | 00 | 01 | R1 | g(t+1) = W01 | 10 | xx 10 = R2 | g(t+2) |
| R1 | 00 01 | W01 = g(t-3) | | xx | 01 | 01 | R2 | | 10 | xx 11 = R3 | g(t-1) |
| R2 | 00 10 | W02 = g(t-2) | | xx | 10 | 01 | R3 | | 10 | xx 00 = R0 | g(t) |
| R3 | 00 11 | W03 = g(t-1) | | xx | 11 | 01 | R0 | | 10 | xx 01 = R1 | gt+1) |
| -- | -------- | ------------ | --------- | ------ | --- | ----- | -------- | ------------ | ----- | ---------- | -------- |
| R4 | 01 00 | W10 = b(t-4) | b(t) = W10 | xx | 00 | 01 | R5 | b(t+1) = W10 | 10 | xx 10 = R6 | b(t+2) |
| R5 | 01 01 | W11 = b(t-3) | | xx | 01 | 01 | R6 | | 10 | xx 11 = R7 | b(t-1) |
| R6 | 01 10 | W12 = b(t-2) | | xx | 10 | 01 | R7 | | 10 | xx 00 = R4 | b(t) |
| R7 | 01 11 | W13 = b(t-1) | | xx | 11 | 01 | R4 | | 10 | xx 01 = R5 | b(t+1) |
| -- | -------- | ------------ | --------- | ------ | --- | ----- | -------- | ------------ | ----- | ---------- | -------- |
| R8 | 10 00 | W20 = d(t-1) | d(t) = W20 | xx | 00 | 01 | R9 | d(t+1) = W20 | 10 | xx 10 = R10 | d(t+2) |
| R9 | 10 01 | | | xx | 01 | 01 | R10 | | 10 | xx 11 + R11 | |
| R10 | 10 10 | | | xx | 10 | 01 | R11 | | 10 | xx 00 = R8 | |
| R11 | 10 11 | | | xx | 11 | 01 | R8 | | 10 | xx 01 = R9 | |
| PHASE t | | | | PHASE t + 1 | | | | | PHASE t + 2 | | |
| 0   MOD 2 | | | | 1   MOD 2 | | | | | 0   MOD 2 | | |

GMOD = 2

# FIG.7

EP 0 373 042 B1

| X< / AMOD | 2 | 4 | 6 | 8 |
|---|---|---|---|---|
| 1 | 10 | | | |
| 2 | | 10 | | |
| 3 | | | 10 | |
| 4 | | 11 | | |
| 5 | | | | 11 |

| CORRBIT 0 | CORRBIT 1 |
|---|---|

# FIG.8

FIG.9A

Parcours a)

```
Pour t:=0 à T_MAX début
   Pour p:=1 à P début:
      Pour i:=0 à Ip début
      ......
      fin
   fin
fin
```

FIG.9B

Parcours b)

```
Pour p:= 1 à P debut:
   Pour t:=0 à T_MAX début:
      Pour i:=0 à Ip début:
      ......
      fin
   fin
fin
```

FIG.9C

Parcours c)

```
Pour p:= 1 à P début:
   Pour i:=0 à Ip début:
      Pour t:= 0 à T_MAX début:
      ......
      fin
   fin
fin
```

| | Représentation schématique | Distance cumulée<br>Equation locale: $g(t,i) =$ | Type |
|---|---|---|---|
| A) | | $\min \begin{cases} g(t,i-1) \\ g(t-1,i-1)+d(t,i) \\ g(t-1,i)+d(t,i) \end{cases}$ | asymétrique suivant la séquence test |
| B) | | $\min \begin{cases} g(t,i-1)+d(t,i) \\ g(t-1,i-1)+2 \times d(t,i) \\ g(t-1,i)+d(t,i) \end{cases}$ | symétrique |
| C) | | $\min \begin{cases} g(t,i-1)+d(t,i) \\ g(t-1,i-1)+d(t,i) \\ g(t-1,i) \end{cases}$ | asymétrique suivant la référence |
| D) | | $\min \begin{cases} g(t-1,i-2)+d(t,i-1)/2+d(t,i)/2 \\ g(t-1,i-1)+d(t,i) \\ g(t-2,i-1)+d(t-1,i)+d(t,i) \end{cases}$ | asymétrique avec contrainte de pente |
| E) | | $\min \begin{cases} g(t-1,i-2)+2 \times d(t,i-1)+d(t,i) \\ g(t-1,i-1)+2 \times d(t,i) \\ g(t-2,i-1)+2 \times d(t-1,i)+d(t,i) \end{cases}$ | symétrique avec contrainte de pente |
| F) | | $\min \begin{cases} g(t-1,i-2)+d(t,i) \\ g(t-1,i-1)+d(t,i) \\ g(t-2,i-1)+2 \times d(t,i) \end{cases}$ | asymétrique simplifiée |
| G) | | $\min \begin{cases} g(t-1,i-2)+3 \times d(t,i) \\ g(t-1,i-1)+2 \times d(t,i) \\ g(t-2,i-1)+3 \times d(t,i) \end{cases}$ | symétrique simplifiée |
| H) | | $\min \begin{cases} g(t-1,i-1)+d(t,i) \\ g(t-1,i-2)+d(t,i) \\ g(t-1,i-3)+d(t,i) \\ g(t-1,i-4)+d(t,i) \end{cases}$ | |

## FIG.10

27